# EUROPEAN PATENT SPECIFICATION

(11) **EP 3 412 482 B1**
(45) Date of publication and mention of the grant of the patent: **18.08.2021**
(21) Application number: 17747379.0
(22) Date of filing: 31.01.2017
(51) Int. Cl.: B60H 1/32, B60K 11/04, B60K 11/08

(54) **METHOD FOR CONTROLLING VEHICLE GRILLE DEVICE**
VERFAHREN ZUR STEUERUNG EINER FAHRZEUGGRILLVORRICHTUNG
PROCÉDÉ DE COMMANDE DE DISPOSITIF DE GRILLE DE VÉHICULE

(30) Priority: 05.02.2016 JP 2016020544
(43) Date of publication of application: 12.12.2018
(73) Proprietor: Valeo Japan Co., Ltd., Saitama 360-0193 (JP)
(72) Inventor: TSUJI, Teruaki, Kumagaya-shi Saitama 360-0193 (JP); AKAHOSHI, Mitsuhiko, Kumagaya-shi Saitama 360-0193 (JP); YOSHIDA, Makoto, Aki-gun Hiroshima 730-8670 (JP)
(74) Representative: Tran, Chi-Hai
(86) International application number: PCT/JP2017/003326
(87) International publication number: WO 2017/135223

(56) References cited:
- WO-A1-2015/115082
- JP-A- S62 181 909
- JP-A- 2008 070 013
- JP-A- 2008 221 997
- JP-A- 2008 221 997
- JP-A- 2014 094 676
- US-A1- 2015 283 872

## Description

### Technical Field

The present invention relates to a technique of suitably controlling opening/closing of a grille device for a vehicle even when a temperature of a refrigerant just behind a downstream of a condenser is not sufficiently reduced in a refrigeration cycle for the vehicle including an internal heat exchanger to thereby improve aerodynamic characteristics of the vehicle and contribute to saving power.

### Background Art

A technique in which air for cooling a condenser or a heat exchanger such as a radiator is introduced from a grille opening provided at a front end part of the vehicle to an engine room and the size of the grille opening can be changed is disclosed (for example, see JP-A-2011-031842). It is thus known that the air introduced into the engine room is reduced by closing the grille opening to thereby improve aerodynamic characteristics of a vehicle at the time of running and improve fuel consumption.

Moreover, a technique in which a pressure of a refrigerant flowing out from a condenser is detected, and an amount of work in a cooling fan blowing air to the condenser is increased when the pressure is higher than a given value to thereby increase a heat exchange amount in the condenser is disclosed (for example, see JP-A-H9-076722). Accordingly, the heat exchange amount in the condenser is adjusted, namely, the amount of work in the cooling fan is increased when the pressure of the refrigerant is high, on the other hand, the amount of work in the cooling fan is reduced when the pressure of the refrigerant is not high, thereby suitably securing cooling ability.

Furthermore, as a structure for improving cooling ability and a coefficient of performance in a refrigeration cycle, a technique of arranging an internal heat exchanger (an apparatus performing heat exchange between a refrigerant having a relatively high temperature and flowing from a condenser and a refrigerant having a relatively low temperature and flowing from an evaporator) in the refrigeration cycle is known (for example, see JP-A-2008122034).

JP 2008 221997 A and JP S62 181909A disclose a method for controlling a vehicle air conditioner and the opening/closing of a grille device.

### Summary of Invention

### Technical Problem

Here, it can be considered that the grille device for the vehicle according to JP-A-2011-031842 is controlled based on the pressure of the refrigerant flowing out from the condenser by using JP-A-H9-076722. That is, the grille opening is opened and the air is introduced into the engine room when the pressure of the refrigerant is high, and on the other hand, the grille opening is closed when the pressure of the refrigerant is not high.

However, when the refrigeration cycle including the internal heat exchanger according to JP-A-2008-122034 is applied to the above system, an inconvenience occurs. The reason will be explained. In the refrigeration cycle according to JP-A-2008-122034 the refrigerant is cooled by the internal heat exchanger even when the pressure and the temperature of the refrigerant just behind the downstream (between the condenser and the internal heat exchanger) is not sufficiently reduced, therefore, the refrigerant can reach an expansion device and the evaporator in a state where the pressure and the temperature of the refrigerant is sufficiently reduced. Accordingly, the grille opening is released unnecessarily to introduce outside air of the vehicle into the engine room until the pressure and the temperature of the refrigerant just behind the condenser is sufficiently reduced, which may hinder improvement in aerodynamic characteristics of the vehicle and a state in which improvement of fuel consumption is difficult may continue.

An object of the present invention is to provide a control method for a grille device for a vehicle suitably controlling opening/closing of the grille device for the vehicle even when the temperature of the refrigerant just behind the downstream of the condenser is not sufficiently reduced in the refrigeration cycle including an internal heat exchanger to thereby improve aerodynamic characteristics of the vehicle and contribute to saving power during running of the vehicle.

### Solution to Problem

An air conditioner for a vehicle mounted on a vehicle including a grille device for a vehicle arranged at a head end part of the vehicle and having a grille opening an opening degree of which is capable of being adjusted between the minimum opening degree and the maximum opening degree includes a refrigeration cycle having a refrigerant circuit connecting a compressor, a condenser, an expansion device and an evaporator by pipes to circulate a refrigerant, and an internal heat exchanger performing heat exchange of the refrigerant between a first heat exchange part in which the refrigerant introduced from the condenser to the expansion device flows and a second heat exchange part in which the refrigerant introduced from the evaporator to a suction side of the compressor flows, a first temperature sensor detecting a temperature of the evaporator or a temperature of air passing through the evaporator, or a second temperature sensor having a measurement point between the evaporator and the internal heat exchanger and an output part outputting a detected value detected by the first temperature sensor or the second temperature sensor to a grille controller controlling the grille device for the vehicle.

A vehicle including the air conditioner for the vehicle includes a grille device for the vehicle arranged at a head end part of the vehicle and having a grille opening an opening degree of which is capable of being adjusted between the minimum opening degree and a grille controller controlling the grille device for the vehicle.

In the control method for a grille device for a vehicle according to the present invention arranged at a head end part of the vehicle and having a grille opening an opening degree of which is capable of being adjusted between the minimum opening degree and the maximum opening degree, in which the vehicle includes an air conditioner for a vehicle, the grille device for the vehicle, the grille controller controlling the grille device for the vehicle and a radiator cooled by outside air introduced from the grille opening, the air conditioner for the vehicle includes a refrigeration cycle having a refrigerant circuit connecting a compressor, a condenser, an expansion device and an evaporator by pipes to circulate a refrigerant, and an internal heat exchanger performing heat exchange of the refrigerant between a first heat exchange part in which the refrigerant introduced from the condenser to the expansion device flows and a second heat exchange part in which the refrigerant introduced from the evaporator to a suction side of the compressor flows, in which the condenser is cooling the refrigerant in the high-temperature and high-pressure vaporized state discharged from the compressor using outside air in front of the vehicle introduced from the grille opening by any one of or both of the running of the vehicle or the operation of a cooling fan so that the refrigerant becomes in a high-temperature and high-pressure liquid state, the air conditioner for the vehicle includes a first temperature sensor detecting a temperature of the evaporator or a temperature of air passing through the evaporator, or a second temperature sensor having a measurement point between the evaporator and the internal heat exchanger and an output part outputting a detected value detected by the first temperature sensor or the second temperature sensor to a grille controller, the control method includes Step S11 of determining the opening degree at the time of determination by the grille controller, Step S12 of comparing the detected value with a prescribed threshold value by the grille controller and Step S13 of controlling the grille opening by the grille controller, in which the Step S13 includes Step S131 of calculating an ideal opening degree necessary for cooling the condenser, Step S132 of calculating a necessary opening degree necessary for cooling the radiator and Step S133 of comparing the ideal opening degree with the necessary opening degree, when the ideal opening degree exceeds the necessary opening degree, control of setting the grille opening to the ideal opening degree is performed, and when the ideal opening degree is equal to or lower than the necessary opening degree, control of setting the grille opening to the necessary opening degree is performed, and the ideal opening degree satisfies the following condition 1. Condition 1: When the opening degree at the time of determination is the maximum opening degree and the detected value is lower than a first threshold value, the ideal opening degree is smaller than the maximum opening degree, and when the opening degree at the time of determination is the minimum opening degree and the detected value is equal to or higher than the first threshold value or exceeds a second threshold value different from the first threshold value, the ideal opening degree is larger than the minimum opening degree.

In the control method for the grille device for the vehicle according to the present invention, it is preferable that the ideal opening degree further satisfies the following condition 2. Condition 2: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is the minimum opening degree, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is the maximum opening degree, in which the second threshold value is higher than the first threshold value.

In the control method for the grille device for the vehicle according to the present invention, it is preferable that the ideal opening degree further satisfies the following condition 3. Condition 3: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is an opening degree determined based on a reduction profile in which the opening degree is reduced continuously or gradually in accordance with reduction of the detected value, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is an opening degree determined based on an increase profile in which the opening degree is increased continuously or gradually in accordance with increase of the detected value, in which the first threshold value is lower than a detected value at which the opening degree is the maximum opening degree in the increase profile and the second threshold value is higher than a detection value at which the opening degree is the minimum opening degree in the reduction profile.

### Advantageous Effects of Invention

According to the present invention, it is provided a control method for a grille device for a vehicle suitably controlling opening/closing of the grille device for the vehicle even when a temperature of a refrigerant just behind a downstream of a condenser is not sufficiently reduced in a refrigeration cycle including an internal heat exchanger to thereby improve aerodynamic characteristics of a vehicle and contribute to saving power during running of the vehile.

### Brief Description of Drawings

[Fig. 1] Fig. 1 is a system diagram showing an example of an air conditioner for a vehicle according to the embodiment.
[Fig. 2] Fig. 2 is a flowchart showing an example of control processing of a grille device for a vehicle when the grille device for the vehicle performs cooling of a radiator.
[Fig. 3] Fig. 3 is a flowchart showing an example of control of an opening degree in the control processing of the grille device for the vehicle shown in Fig. 2.
[Fig. 4] Fig. 4 is a graph showing a first example of a calculation method for an ideal opening degree.
[Fig. 5] Fig. 5 is a graph showing a second example of the calculation method for the ideal opening degree.
[Fig. 6] Fig. 6 is a graph showing a third example of the calculation method for the ideal opening degree.

### Description of Embodiments

Hereinafter, an embodiment of the present invention will be explained with reference to the attached drawings. The embodiment explained below is an example of the present invention, and the present invention is not limited to the following embodiment. Components with the same symbols indicate the same components in the specification and the drawings. Various alterations may occur as long as advantages of the present invention can be obtained.

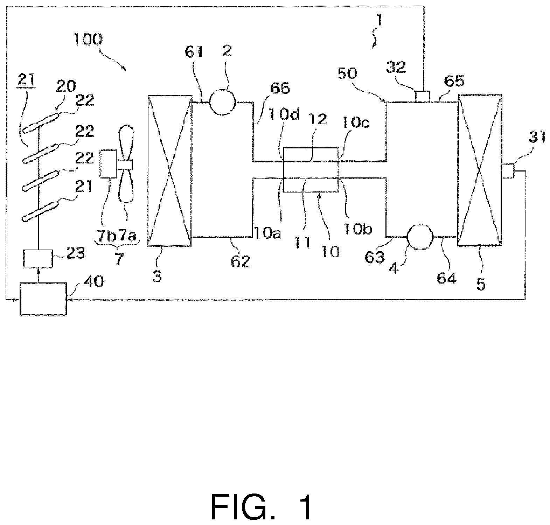

Fig. 1 is a system diagram showing an example of an air conditioner for a vehicle. An air conditioner for a vehicle 100 mounted on a vehicle including a grille device for a vehicle 20 arranged at a head end part of the vehicle and having a grille opening 21 an opening degree of which can be adjusted between the minimum opening degree and the maximum opening degree includes a refrigeration cycle 1 having a refrigerant circuit 50 connecting a compressor 2, a condenser 3, an expansion device 4 and an evaporator 5 by pipes 61 to 66 to circulate a refrigerant, and an internal heat exchanger 10 performing heat exchange of the refrigerant between a first heat exchange part 11 in which the refrigerant introduced from the condenser 3 to the expansion device 4 flows and a second heat exchange part 12 in which refrigerant introduced from the evaporator 5 to a suction side of the compressor 2 flows, a first temperature sensor 31 detecting a temperature of the evaporator 5 or a temperature of air passing through the evaporator 5, or a second temperature sensor 32 having a measurement point between the evaporator 5 and the internal heat exchanger 10, and an output part (not shown) outputting a detected value (detected temperature) detected by the first temperature sensor 31 or the second temperature sensor 32 to a grille controller 40 controlling the grille device for the vehicle 20.

The refrigerant circuit 50 is a closed circuit connecting the compressor 2, the condenser 3, the expansion device 4 and the evaporator 5 by the pipes 61 to 66, inside which the refrigerant circulates. The refrigerant is, for example, a fluorocarbon material such as R134a, HFO-1234yf, or carbon dioxide. In the case where the refrigerant circulating the inside is the fluorocarbon material, the refrigerant circuit 50 includes a liquid tank (not shown) for separating the refrigerant into a gaseous refrigerant and a liquid refrigerant and storing part of the refrigerant inside the condenser 3 or between the condenser 3 and the internal heat exchanger 10. In the case where the refrigerant circulating the inside is carbon dioxide, the refrigerant circuit 50 includes an accumulator (not shown) storing part of the refrigerant between the evaporator 5 and the compressor 2.

The compressor 2 compresses the refrigerant in a low-temperature and low-pressure vaporized state to be the refrigerant in a high-temperature and high-pressure vaporized state by receiving a drive force from an engine (not shown) or receiving a drive force from a motor (not shown) driven by power. The compressor 2 may be a fixed capacity type or may be a variable capacity type.

The condenser 3 is generally arranged in front of a radiator in the engine room at the head end part (front) of the vehicle. According to the invention, the condenser 3 is a heat exchanger, cooling the refrigerant in the high-temperature and high-pressure vaporized state discharged from the compressor 2 using outside air in front of the vehicle introduced from the grille opening 21 by any one of or both of the running of the vehicle or the operation of a cooling fan 7 so that the refrigerant becomes in a high-temperature and high-pressure liquid state.

The expansion device 4 decompresses/expands the refrigerant condensed in the condenser 3 by throttling operation to be the refrigerant in a low-temperature and low-pressure mist state (refrigerant in a gas-liquid mixed state) as well as adjusts a flow rate of the refrigerant. The expansion device 4 is, for example, a thermostatic expansion valve or an electronically-controlled expansion valve.

The evaporator 5 is a heat exchanger, evaporating the refrigerant becoming in the gas-liquid mixed state in the expansion device 4, cooling and dehumidifying blowing air passing through the evaporator 5 by evaporation heat generated at that time.

The internal heat exchanger 10 is arranged on the refrigerant circuit 50. The internal heat exchanger 10 includes the first heat exchange part 11 in which the refrigerant introducing from the condenser 3 to the expansion device 4 flows and the second heat exchange part 12 in which refrigerant introducing from the evaporator 5 to the suction side of the compressor 2 flows, performing heat exchange between a relatively high-temperature refrigerant flowing in the first heat exchange part 11 and a relatively low-temperature refrigerant flowing in the second heat exchange part 12.

The pipe 61 connects an outlet of the compressor 2 and an inlet of the condenser 3 directly or indirectly. The pipe 62 connects an outlet of the condenser 3 and an inlet 10a of the first heat exchange part 11 directly or indirectly. The pipe 63 connects an outlet 10b of the first heat exchange part 11 and an inlet of the expansion device 4 directly or indirectly. The pipe 64 connects an outlet of the expansion device 4 and an inlet of the evaporator 5 directly or indirectly. The pipe 65 connects an outlet of the evaporator 5 and an inlet 10c of the second heat exchange part 12 directly or indirectly. The pipe 66 connects an outlet 10d of the second heat exchange part 12 and an inlet of the compressor 2 directly or indirectly.

The grille device for the vehicle 20 includes the grille opening 21, louvers 22 and a motor 23. The grille opening 21 is provided at a front surface part of the vehicle such as a front grille, which is an inlet for introducing outside air in front of the vehicle into the engine room. The outside air introduced from the grille opening 21 into the engine room passes through the condenser 3. As a result, the high-temperature and high-pressure refrigerant inside the condenser 3 is cooled. The louvers 22 correspond to an on-off shutter that changes an opening area of the grille opening 21. The motor 23 is a drive device for turning respective blades of the louvers 22.

When the direction of the louvers 22 is closest to the horizontal direction within a rotatable range of the louvers 22, the grille opening 21 has the maximum opening area. On the other hand, when the direction of the louvers 22 is closest to the vertical direction within the rotatable range of the louvers 22, the grille opening 21 has the minimum opening area. The opening degree of the grille device for the vehicle 20 is a value indicating the opening area on a percentage basis when the minimum opening area of the grille opening 21 is 0% and the maximum opening area of the grille opening 21 is 100%.

The grille device for the vehicle 20 adjusts the opening degree so as to be a given opening degree between the minimum opening degree (0%) and the maximum opening degree (100%) by driving the motor 23. Cooling ability of the condenser 3 can be adjusted by adjusting the opening degree. The higher the opening degree is, the larger an amount of outside air introduced from the grille opening 21 into the engine room becomes, therefore, the cooling ability of the condenser 3 is increased. On the other hand, the lower the opening degree is, the smaller the amount of outside air introduced into the engine room becomes, as a result, the cooling ability of the condenser 3 is reduced, however, aerodynamic characteristics of the vehicle at the time of running is improved to thereby improve fuel consumption. When the opening degree is the minimum opening degree, the grille opening 21 may be in a fully closed state or in a slightly opened state. Air resistance at the time of running is reduced even in the slightly opened state, and aerodynamic characteristics can be secured.

The cooling fan 7 has an impeller 7a and a motor 7b. The cooling fan 7 generates the air flow for cooling the condenser 3 by the impeller 7a being rotated by the motor 7b. The amount of air introduced into the condenser 3 changes according to the number of rotations of the motor 7b. The cooling fan 7 may be a fan dedicated to the condenser 3 or may be a fan also used for cooling the radiator (not shown) arranged close to a lower side of the condenser 3.

The cooling fan 7 may be arranged on the front side of the vehicle with respect to the condenser 3 or may be arranged on the rear side of the vehicle. The number of cooling fans 7 is not limited and one or two or more cooling fans 7 may be provided.

The first temperature sensor 31 is a device detecting the temperature of the evaporator 5 or the temperature of air passing through the evaporator 5, which is an existing device in a related-art refrigeration cycle. When the first temperature sensor 31 detects the temperature of the evaporator 5, a measurement point of the first temperature sensor 31 is attached to, for example, a fin at a portion where the temperature is the lowest in the evaporator 5. When the first temperature sensor 31 detects the temperature of air passing through the evaporator 5, the measurement point of the first temperature sensor 31 is attached in a space on a downstream side at the portion where the temperature is the lowest in the evaporator 5 with a well-known structure. In the related-art refrigeration cycle, a detected value (detected temperature) of the first temperature sensor 31 is used for, for example, on-off control of the fixed-capacity type compressor 2. More specifically, when the temperature of the evaporator 5 or the temperature of the air passing through the evaporator 5 exceeds a set value, the compressor 2 is controlled to be driven, and when the temperature of the evaporator 5 or the temperature of the air passing through the evaporator 5 is equal to or lower than the set value, the compressor 2 is controlled to be stopped. The detected value is also used for controlling a discharge amount of the variable-capacity type compressor 2. More specifically, when the temperature of the evaporator 5 or the temperature of the air passing through the evaporator 5 exceeds the set value, a discharge amount of the compressor 2 is controlled to be increased, and when the temperature of the evaporator 5 or the temperature of the air passing through the evaporator 5 is equal to or lower than the set value, the compressor 2 is controlled to reduce the discharge amount. The reason why the first temperature sensor 31 is installed at the portion where the temperature is the lowest in the evaporator 5 is for detecting freezing of the evaporator 5 at an early stage. The portion where the temperature is the lowest in the evaporator 5 is a portion where a superheat degree of the refrigerant is the lowest or the superheat degree is 0 (zero) in the refrigerant circuit 50. In the embodiment, the detected value of the first temperature sensor 31 is used not only in the related-art refrigeration cycle but also used for controlling a blowing amount of the cooling fan 7. The detected value of the first temperature sensor 31 is a value correlating with the temperature and the blowing amount of air fed from the blower fan to the evaporator 5, which can be an index of cooling ability of the refrigeration cycle 1 (the cooling ability of the refrigeration cycle in the specification indicates cooling ability fulfilled with respect to a load received in the refrigeration cycle 1 at an arbitrary point. Accordingly, the cooling ability of the refrigeration cycle 1 can be grasped without adding a component by using the detected value of the first temperature sensor 31. Then, the index of the cooling ability of the refrigeration cycle 1 is added to control of the opening degree of the grille device for the vehicle 20, thereby suitably preventing unnecessary release of the grille opening 21 and improving aerodynamic characteristics of the vehicle.

The second temperature sensor 32 is a device detecting the temperature of the refrigerant flowing out from the evaporator 5. A measurement point of the second temperature sensor 32 is attached, for example, to an outer periphery of a refrigerant outlet pipe (not shown) of the evaporator 5 or an outer periphery of the pipe 65 so that the measurement point contacts the outer periphery. The temperature of the refrigerant at the outlet of the evaporator 5 detected by the second temperature sensor 32 is used for controlling a valve opening degree of the expansion device 4. More specifically, the valve opening degree of the expansion device 4 is controlled so that a value of a superheat degree at the outlet of the refrigerant in the evaporator 5 becomes a target value based on the detected value (detected temperature) of the second temperature sensor 32. Therefore, the superheat degree at the outlet of the evaporator 5 can be grasped from the detected value of the second temperature sensor 32. When the expansion device 4 is an electronically-controlled expansion valve, a temperature sensor used for controlling the valve opening degree of the electronically-controlled expansion valve may be used as the second temperature sensor 32. In the embodiment, the detected value of the second temperature sensor 32 is used for controlling the grille device for the vehicle 20, thereby grasping the cooling ability of the refrigerant cycle 1 from the superheat degree of the refrigerant at the outlet of the evaporator 5, suitably preventing unnecessary release of the grille opening 21 and improving aerodynamic characteristics of the vehicle.

The output part (not shown) includes, for example, an output terminal of the first temperature sensor 31 or the second temperature sensor 32. The output terminal is electrically connected to the grill controller 40, and outputs a detected value of the first temperature sensor 31 or a detected value of the second temperature sensor 32, for example, in a format of an analog signal or digital data.

As information of the detected value of the first temperature sensor 31 or the detected value of the second temperature sensor 32 is inputted from the output part, the grille controller 40 controls the motor 23 of the grille device for the vehicle 20 by using the information. As the first temperature sensor 31 and the second temperature sensor 32 are both arranged close to the evaporator 5 than the internal heat exchanger 10, the cooling ability of the refrigerant cycle 1 can be suitably grasped even when the pressure of the refrigerant just after flowing out from the condenser 3 is not sufficiently reduced. As a result, the grille opening is suitably closed (or the opening area is reduced) when the cooling ability is sufficient, thereby improving aerodynamic characteristics of the vehicle and contributing to power saving during running of the vehicle.

The grille controller 40 is preferably mounted on an air conditioner control unit (not shown) or mounted on an engine control unit (not shown) of the vehicle on which the air conditioner for the vehicle 100 is mounted. Flexible response can be made with respect to design concept of the vehicle and various types of factors such as a memory capacity or costs.

Next, a control method for the grille device for the vehicle 20 according to the embodiment will be explained. The control method for the grille device for the vehicle 20 according to the invention includes a control method used when the vehicle is provided with a radiator cooled by outside air introduced from the grille opening. The radiator is a heat exchanger for cooling a coolant used for cooling, for example, an engine, a motor, a transmission or a battery. When the vehicle is provided with the radiator cooled by outside air introduced from the grille opening, the grille device for the vehicle 20 combines cooling of the condenser 3 and the cooling of the radiator.

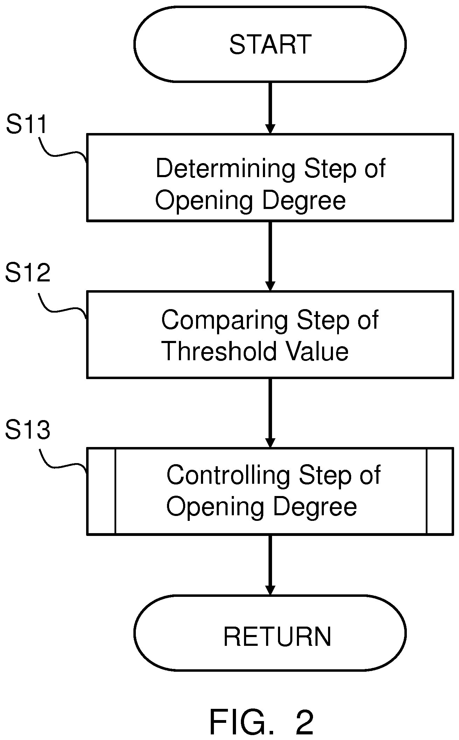

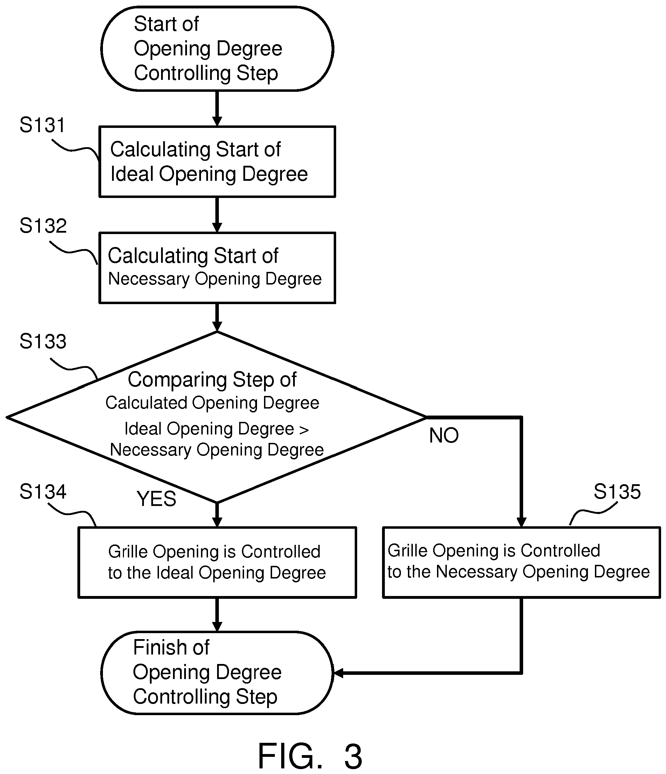

First, the control method used when the vehicle is provided with the radiator cooled by outside air introduced from the grille opening will be explained with reference to Fig. 2 and Fig. 3. As shown in Fig. 2, the control method for the grille device for the vehicle 20 according to the embodiment includes Step S11 of determining the opening degree at the time of determination by the grille controller 40, Step S12 of comparing the detected value with a prescribed threshold value by the grille controller 40 and Step S13 of controlling the grille opening by the grille controller 40. Step S13 includes Step S131 of calculating an ideal opening degree necessary for cooling the condenser 3, Step S132 of calculating a necessary opening degree necessary for cooling the radiator and Step S133 of comparing the ideal opening degree with the necessary opening degree. When the ideal opening degree exceeds the necessary opening degree, control of setting the grille opening to the ideal opening degree is performed (Step S134), and when the ideal opening degree is equal to or lower than the necessary opening degree, control of setting the grille opening to the necessary opening degree is performed (Step S135), and the ideal opening degree satisfies the following condition 1.

Condition 1: When the opening degree at the time of determination is the maximum opening degree and the detected value is lower than a first threshold value, the ideal opening degree is smaller than the maximum opening degree, and when the opening degree at the time of determination is the minimum opening degree and the detected value is equal to or higher than the first threshold value or exceeds a second threshold value different from the first threshold value, the ideal opening degree is larger than the minimum opening degree.

### (Step S11)

In Step S11 of determining the opening degree, the grille controller 40 preferably determines whether the opening degree at the time of determination is the maximum opening degree or the minimum opening degree.

### (Step S12)

In Step S12 of comparing with the threshold value, the grille controller 40 compares the detected value with a prescribed threshold value when information of the detected value of the first temperature sensor 31 or the detected value of the second temperature sensor 32 is inputted from the output part.

The prescribed threshold value is preferably, for example, 3 to 12°C, and more preferably, 5 to 7°C. The prescribed threshold value used when the opening degree is the minimum opening degree in the determination result in S11 of determining the opening degree may be the same value as the prescribed threshold value (first threshold value) used when the opening degree is the maximum opening degree in the determination result of S11 of determining the opening degree or may be a different value (second threshold value) from the above. More preferably, the threshold value is the different value (second threshold value). Hysteresis control in which a temperature difference is provided between the prescribed threshold value used when the opening degree is the maximum opening degree and the prescribed threshold value used when the opening degree is the minimum opening degree is adopted, thereby preventing the grille device for the vehicle 20 from opening and closing frequently.

### (Step S13)

Step S13 of controlling the opening degree includes Step S131 of calculating the ideal opening degree, Step S132 of calculating the necessary opening degree and Step S133 of comparing with the calculated opening degrees as shown in Fig. 3. In Step S13 of controlling the opening degree, the control for cooling the radiator has priority over the control for improving aerodynamic characteristics of the vehicle.

### (Step S131)

In Step S131 of calculating the ideal opening degree, the grille controller 40 calculates the ideal opening degree based on the S11 of determining the opening degree and Step S12 of comparing with the threshold value. The ideal opening degree is an opening degree necessary for cooling the condenser 3 for appropriately securing the cooling ability of the refrigeration cycle 1. As the cooling ability of the refrigeration cycle 1 is sufficiently secured when the opening degree at the time of determination is the maximum opening degree and the detected value (detected temperature) is lower than the first threshold value, it is preferable that the improvement of aerodynamic characteristics of the vehicle has priority over the improvement of cooling ability. Accordingly, the ideal opening degree is set to an opening degree smaller than the maximum opening degree, thereby reducing the opening area of the grille opening 21 and improving the aerodynamic characteristics of the vehicle. On the other hand, the cooling ability is insufficient when the opening degree at the time of determination is the minimum opening degree and the detected value (detected temperature) is equal to or higher than the first threshold value or exceeds the second threshold value different from the first threshold value, therefore, it is preferable that improvement of cooling ability has priority over the improvement of aerodynamic characteristics of the vehicle. Accordingly, the ideal opening degree is set to an opening degree larger than the minimum opening degree, thereby improving the cooling ability of the condenser 3 and sufficiently securing the cooling ability of the refrigeration cycle 1.

### (Step S132)

In Step S132 of calculating the necessary opening, the grille controller 40 calculates an opening degree necessary for cooling the radiator (called the necessary opening degree) based on information of the temperature of an engine coolant.

### (Step S133)

In Step S133 of comparing with the calculated opening degrees, the grille controller 40 compared with the ideal opening degree calculate in Step S131 of calculating the ideal opening with the necessary opening degree calculated in Step S132 of calculating the necessary opening degree.

### (Step S134)

In Step S133 of comparing with the calculated opening degree, when the ideal opening degree is determined to exceed the necessary opening degree, Step S134 is executed. When the ideal opening degree exceeds the necessary opening degree, the radiator can be sufficiently cooled even when the grille opening is set to have the ideal opening degree. That is because the temperature of the condenser 3 is lower than that of the radiator and the radiator can be cooled by the air passing through the condenser 3. Accordingly, the grille controller 40 controls the grille opening to have the ideal opening degree in Step S134.

### (Step S135)

In Step S133 of comparing with the calculated opening degrees, when it is determined that the ideal opening degree is equal to or lower than the necessary opening degree, Step S135 is executed. When the ideal opening degree is equal to or lower than the necessary opening degree, the cooling of the radiator will be insufficient if the grille opening is set to have the ideal opening degree. Accordingly, the grille opening is controlled to have the necessary opening degree in Step S135.

According to Step S11 to S13, it is possible to avoid inconvenience in cooling of the radiator and the engine room while suitably controlling opening/closing of the grille device for the vehicle.

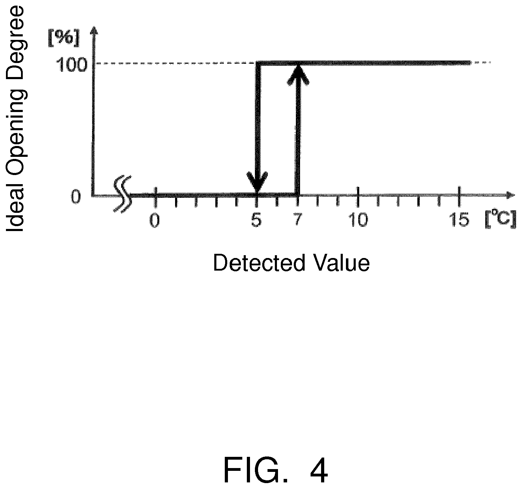

Next, a specific example of a calculation method for the ideal opening degree in Step S131 of calculating the ideal opening degree will be explained with reference to Fig. 4 to Fig. 6.

Fig. 4 is a graph showing a first example of the calculation method for the ideal opening degree. In the control method for the grill device for the vehicle according to the embodiment, it is preferable that the ideal opening degree further satisfies the following condition 2 as shown in Fig. 4.

Condition 2: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is the minimum opening degree, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is the maximum opening degree, in which the second threshold value is higher than the first threshold value.

In the calculation method of the first example, a prescribed threshold value used when the opening degree is the maximum opening degree is the first threshold value and a prescribed threshold value used when the opening degree is the minimum opening degree is the second threshold value. The second threshold value is higher than the first threshold value. In Fig. 4, a state in which the first threshold value is 5°C and the second threshold value is 7°C is shown as an example, however, the present invention is not limited to this.

As the cooling ability of the refrigeration cycle is insufficient when the opening degree at the time of determination is the maximum opening degree and the detected value is equal to or higher than the first threshold value, it is desirable that securement the cooling ability has priority over the improvement of aerodynamic characteristics. Accordingly, the ideal opening degree is kept in the maximum opening degree to thereby maintain the cooling ability of the condenser 3 to be high and to improve the cooling ability of the refrigeration cycle 1.

As the cooling ability of the refrigeration cycle 1 is sufficiently secured when the opening degree at the time of determination is the maximum opening degree and the detected value is lower than the first threshold value, it is desirable that the improvement of aerodynamic characteristics of the vehicle has priority over the securement of the cooling ability. Accordingly, the ideal opening degree is set to the minimum opening degree to thereby reduce the opening area of the grille opening 21 and to improve aerodynamic characteristics of the vehicle.

As the cooling ability of the refrigeration cycle 1 is sufficiently secured when the opening degree at the time of determination is the minimum opening degree and the detected value is equal to or lower than the second threshold value, it is desirable that the improvement of aerodynamic characteristics of the vehicle has priority over the securement of the cooling ability. Accordingly, the ideal opening degree is kept in the maximum opening degree to thereby improve aerodynamic characteristics of the vehicle.

As the cooling ability of the refrigeration cycle 1 is insufficient when the opening degree at the time of determination is the minimum opening degree and the detected value exceeds the second threshold value, it is desirable that securement the cooling ability has priority over the improvement of aerodynamic characteristics. Accordingly, the ideal opening degree is set to the maximum opening degree to thereby improve the cooling ability of the condenser 3 and to improve the cooling ability of the refrigeration cycle 1.

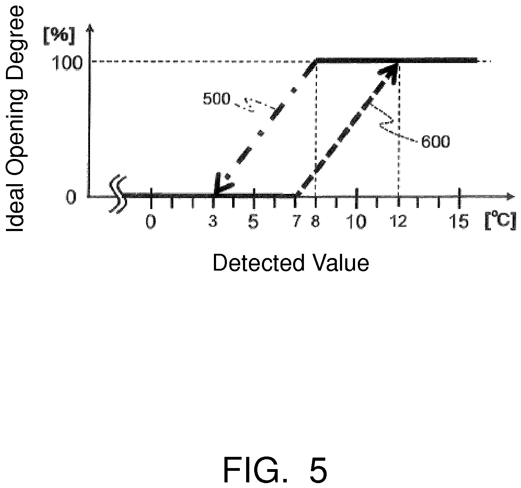

Fig. 5 is a graph showing a second example of the calculation method for the ideal opening degree. In the control method for the vehicle grill device according to the embodiment, it is preferable that the ideal opening degree further satisfies the following condition 3 as shown in Fig. 5.

Condition 3: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is an opening degree determined based on a reduction profile 500 in which the opening degree is reduced continuously or gradually in accordance with reduction of the detected value, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is an opening degree determined based on an increase profile 600 in which the opening degree is increased continuously or gradually in accordance with increase of the detected value, in which the first threshold value is lower than a detected value at which the opening degree is the maximum opening degree in the increase profile 600 and the second threshold value is higher than a detection value at which the opening degree is the minimum opening degree in the reduction profile 500.

In the second calculation method, the prescribed threshold value used when the opening degree is the minimum opening degree is the first threshold value, and the prescribed threshold value used when the opening degree is the minimum opening degree is the second threshold value. The first threshold value is lower than a detected value at which the opening degree is the maximum opening degree in the increase profile 600. In Fig. 5, a state in which the first threshold value is 8°C and the detected value at which the opening degree is the maximum opening degree in the increase profile 600 is 12°C is shown. Moreover, the second threshold value is higher than a detected value at which the opening degree is the minimum opening degree in the reduction profile 500. In Fig. 5, a state in which the second threshold value is 7°C and the detected value at which the opening degree is the minimum opening degree in the reduction profile 500 is 3°C is shown. The present invention is not limited to values of respective temperatures.

To reduce (increase) the opening degree continuously in accordance with reduction (increase) of the detected value means that variation of the opening degree with respect to detected values is smooth. For example, when the graph in which the horizontal axis shows the detected value and the vertical axis shows the ideal opening degree is created as shown in Fig. 5, a graph with an upward-sloping straight line shape (shown in Fig. 5) or curved line shape (not shown) is drawn.

As the cooling ability of the refrigeration cycle 1 is insufficient when the opening degree at the time of determination is the maximum opening degree and the detected value is equal to or higher than the first threshold value, it is desirable that securement the cooling ability has priority over the improvement of aerodynamic characteristics. Accordingly, the ideal opening degree is kept in the maximum opening degree to thereby maintain the cooling ability of the condenser 3 to be high and to improve the cooling ability of the refrigeration cycle 1.

As the cooling ability of the refrigeration cycle 1 is sufficiently secured when the opening degree at the time of determination is the maximum opening degree and the detected value is lower than the first threshold value, it is desirable that the improvement of aerodynamic characteristics of the vehicle has priority over the securement of the cooling ability. Accordingly, the ideal opening degree is set to the opening degree determined based on the reduction profile 500 to thereby reduce the opening area of the grille opening 21 in accordance with the cooling ability of the refrigerant cycle 1 and to improve aerodynamic characteristics of the vehicle.

As the cooling ability of the refrigeration cycle 1 is sufficiently secured when the opening degree at the time of determination is the minimum opening degree and the detected value is equal to or lower than the second threshold value, it is desirable that the improvement of aerodynamic characteristics of the vehicle has priority over the securement of the cooling ability. Accordingly, the ideal opening degree is kept in the maximum opening degree to thereby improve aerodynamic characteristics of the vehicle.

As the cooling ability of the refrigeration cycle 1 is insufficient when the opening degree at the time of determination is the minimum opening degree and the detected value exceeds the second threshold value, it is desirable that securement the cooling ability has priority over the improvement of aerodynamic characteristics. Accordingly, the ideal opening degree is set to the opening degree determined based on the increase profile 600 to thereby improve the cooling ability of the condenser 3 in accordance with the cooling ability of the refrigeration cycle 1 and to improve the cooling ability of the refrigeration cycle 1.

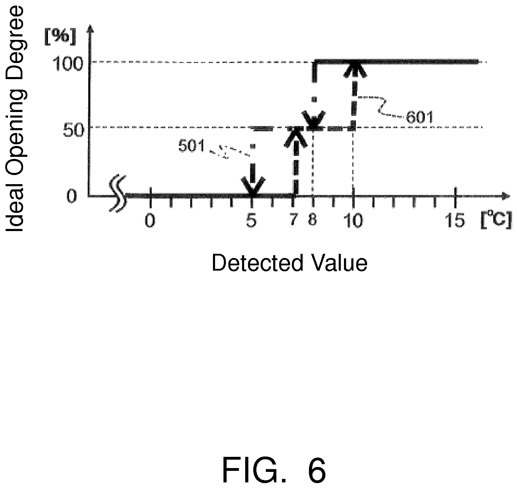

Fig. 6 is a graph showing a third example of the calculation method for the ideal opening degree. The calculation method in the third example is the same as the calculation method in the second example except that the reduction profile 500 in the calculation method in the second example is changed to a reduction profile 501 in which the opening degree is reduced gradually in accordance with reduction of the detected value, and the increase profile 600 in the calculation method in the second example is changed to an increase profile 601 in which the opening degree is increased gradually in accordance with increase of the detected value.

To reduce (increase) the opening degree gradually in accordance with reduction (increase) of the detected value means that variation of the opening degree with respect to detected values is stepwise. For example, when the graph in which the horizontal axis shows the detected value and the vertical axis shows the ideal opening degree is created as shown in Fig. 6, a graph with an upward-sloping stepwise shape is drawn. A state in which the reduction profile 501 and the increase profile 601 change the opening degree in three stages of 0%, 50% and 100% is shown as an example in Fig. 6, however, the present invention is not limited to this, and the opening degree may be changed in four stages or more.

The ideal opening degree can be calculated by the calculation method in the first example more easily as compared with the calculation methods in the second example and the third example. The opening area of the grille opening 21 is changed in accordance with the cooling ability of the refrigeration cycle 1 in the calculation methods in the second example and the third example, therefore, both improvement in the cooling ability of the refrigeration cycle 1 and improvement in aerodynamic characteristics of the vehicle can be realized with better balance.

A vehicle provided with the air conditioner for the vehicle 100, including the grille device for the vehicle 20 arranged at a head end part of the vehicle and having the grille opening 21 an opening degree of which can be adjusted between the minimum opening degree and the maximum opening degree and the grille controller 40 controlling the grille device for the vehicle 20. As described above, the air conditioner for the vehicle 100 can suitably control opening/closing of the vehicle grille device. As a result, the vehicle can improve aerodynamic characteristics and realize power saving at the time of running.

### Reference Signs List

- 1: refrigeration cycle
- 2: compressor
- 3: condenser
- 4: expansion device
- 5: evaporator
- 7: cooling fan
- 7a: impeller
- 7b: motor
- 10: internal heat exchanger
- 10a: inlet of first heat exchange part
- 10b: outlet of first heat exchange part
- 10c: inlet of second heat exchange part
- 10d: outlet of the second exchange part
- 11: first heat exchange part
- 12: second exchange part
- 20: grille device for vehicle
- 21: grille opening
- 22: louver
- 23: motor
- 31: first temperature sensor
- 32: second temperature sensor
- 40: grille controller
- 50: refrigerant circuit
- 61 to 66: pipe
- 100: air conditioner for vehicle
- 500, 501: reduction profile
- 600, 601: increase profile

## Claims

1. A control method for a grille device for a vehicle (20) arranged at a head end part of the vehicle and having a grille opening (21) an opening degree of which is capable of being adjusted between the minimum opening degree and the maximum opening degree,
in which the vehicle includes an air conditioner for a vehicle (100), the grille device for the vehicle (20), the grille controller (40) controlling the grille device for the vehicle and a radiator cooled by outside air introduced from the grille opening,
the air conditioner for the vehicle (100) includes a refrigeration cycle (1) having a refrigerant circuit (50) connecting a compressor (2), a condenser (3), an expansion device (4) and an evaporator (5) by pipes (61, 62, 63, 64, 65, 66) to circulate a refrigerant, and an internal heat exchanger (10) performing heat exchange of the refrigerant between a first heat exchange part (11) in which the refrigerant introduced from the condenser (3) to the expansion device (4) flows and a second heat exchange part (12) in which the refrigerant introduced from the evaporator (5) to a suction side of the compressor (2) flows,
in which the condenser is cooling the refrigerant in the high-temperature and high-pressure vaporized state discharged from the compressor 2 using outside air in front of the vehicle introduced from the grille opening 21 by any one of or both of the running of the vehicle or the operation of a cooling fan 7 so that the refrigerant becomes in a high-temperature and high-pressure liquid state
the air conditioner for the vehicle (100) includes a first temperature sensor (31) detecting a temperature of the evaporator or a temperature of air passing through the evaporator, or a second temperature sensor (32) having a measurement point between the evaporator and the internal heat exchanger and
an output part outputting a detected value detected by the first temperature sensor (31) or the second temperature sensor (32) to a grille controller (40), the control method comprising:
Step S11 of determining the opening degree at the time of determination by the grille controller (40);
Step S12 of comparing the detected value with a prescribed threshold value by the grille controller (40); and
Step S13 of controlling the grille opening by the grille controller (40),
**characterized in that** the Step S13 includes Step S131 of calculating an ideal opening degree necessary for cooling the condenser (3), Step S132 of calculating a necessary opening degree necessary for cooling the radiator and Step S133 of comparing the ideal opening degree with the necessary opening degree,
when the ideal opening degree exceeds the necessary opening degree, control of setting the grille opening (21) to the ideal opening degree is performed, and when the ideal opening degree is equal to or lower than the necessary opening degree, control of setting the grille opening (21) to the necessary opening degree is performed, and
the ideal opening degree satisfies the following condition 1,
Condition 1: When the opening degree at the time of determination is the maximum opening degree and the detected value is lower than a first threshold value, the ideal opening degree is smaller than the maximum opening degree, and when the opening degree at the time of determination is the minimum opening degree and the detected value is equal to or higher than the first threshold value or exceeds a second threshold value different from the first threshold value, the ideal opening degree is larger than the minimum opening degree.

2. The control method for the grille device for the vehicle (20) according to claim 1,
wherein the ideal opening degree further satisfies the following condition 2,
Condition 2: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is the minimum opening degree, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is the maximum opening degree, in which the second threshold value is higher than the first threshold value.

3. The control method for the grille device for the vehicle (20) according to claim 1,
wherein the ideal opening degree further satisfies the following condition 3,
Condition 3: When the opening degree at the time of determination is the maximum opening degree and the detected value is equal to or higher than the first threshold value, the ideal opening degree is the maximum opening degree, when the opening degree at the time of determination is the maximum opening degree and the detected value is lower than the first threshold value, the ideal opening degree is an opening degree determined based on a reduction profile (500, 501) in which the opening degree is reduced continuously or gradually in accordance with reduction of the detected value, when the opening degree at the time of determination is the minimum opening degree and the detected value is equal to or lower than the second threshold value, the ideal opening degree is the minimum opening degree, and when the opening degree at the time of determination is the minimum opening degree and the detected value exceeds the second threshold value, the ideal opening degree is an opening degree determined based on an increase profile (600, 601) in which the opening degree is increased continuously or gradually in accordance with increase of the detected value, in which the first threshold value is lower than a detected value at which the opening degree is the maximum opening degree in the increase profile (600, 601) and the second threshold value is higher than a detection value at which the opening degree is the minimum opening degree in the reduction profile (500, 501).

## Patentansprüche

1. Steuerungsverfahren für eine Grillvorrichtung für ein Fahrzeug (20), die an einem Kopfendteil des Fahrzeugs angeordnet ist und eine Grillöffnung (21) aufweist, deren Öffnungsgrad zwischen einem minimalen Öffnungsgrad und einem maximalen Öffnungsgrad eingestellt werden kann, bei dem das Fahrzeug eine Klimaanlage für ein Fahrzeug (100), die Grillvorrichtung für das Fahrzeug (20), die Grillsteuervorrichtung (40), die die Grillvorrichtung für das Fahrzeug steuert, und einen Kühler, der durch über die Grillöffnung eingeführte Außenluft gekühlt wird, enthält,
die Klimaanlage für das Fahrzeug (100) einen Kältezyklus (1) mit einem Kältemittelkreislauf (50), der einen Kompressor (2), einen Kondensator (3), eine Expansionsvorrichtung (4) und einen Verdampfer (5) durch Rohre (61, 62, 63, 64, 65, 66) zum Zirkulieren von Kältemittel verbindet, und einen internen Wärmetauscher (10), der einen Wärmeaustausch des Kältemittels zwischen einem ersten Wärmetauschteil (11), in dem das aus dem Kondensator (3) zur Expansionsvorrichtung (4) eingeleitete Kältemittel fließt, und einen zweiten Wärmetauschteil (12), in dem das aus dem Verdampfer (5) zu einer Saugseite des Kompressors (2) eingeleitete Kältemittel fließt, enthält,
bei dem der Kondensator das aus dem Kompressor (2) ausgestoßene Kältemittel im verdampften Zustand hoher Temperatur und hohen Drucks unter Verwendung von Außenluft vor dem Fahrzeug abkühlt, die über die Grillöffnung (21) durch das Fahren des Fahrzeugs und/oder den Betrieb eines Kühlventilators (7) eingeführt wird, sodass das Kältemittel in einen flüssigen Zustand hoher Temperatur und hohen Drucks übergeht;
die Klimaanlage für das Fahrzeug (100) einen ersten Temperatursensor (31), der eine Temperatur des Verdampfers oder eine Temperatur der durch den Verdampfer strömenden Luft erfasst, oder einen zweiten Temperatursensor (32), der einen Messpunkt zwischen dem Verdampfer und dem internen Wärmetauscher aufweist, enthält und
ein Ausgabeteil, das einen aus dem ersten Temperatursensor (31) oder dem zweiten Temperatursensor (32) erfassten Wert an eine Grillsteuervorrichtung (40) ausgibt, wobei das Steuerungsverfahren umfasst:
Schritt S11 zum Bestimmen des Öffnungsgrades zum Zeitpunkt der Bestimmung durch die Grillsteuervorrichtung (40);
Schritt S12 zum Vergleichen des erfassten Wertes mit einem vorgeschriebenen Schwellenwert durch die Grillsteuervorrichtung (40); und
Schritt S13 zum Steuern der Grillöffnung durch die Grillsteuervorrichtung (40),
**dadurch gekennzeichnet, dass** der Schritt S13 den Schritt S131 zum Berechnen eines idealen Öffnungsgrades, der zum Kühlen des Kondensators (3) notwendig ist, den Schritt S132 zum Berechnen eines notwendigen Öffnungsgrades, der zum Kühlen des Kühlers notwendig ist, und den Schritt S133 zum Vergleichen des idealen Öffnungsgrades mit dem notwendigen Öffnungsgrad enthält,
wenn der ideale Öffnungsgrad den notwendigen Öffnungsgrad übersteigt, die Steuerung der Einstellung der Grillöffnung (21) auf den idealen Öffnungsgrad durchgeführt wird, und wenn der ideale Öffnungsgrad gleich oder niedriger als der notwendige Öffnungsgrad ist, die Steuerung der Einstellung der Grillöffnung (21) auf den notwendigen Öffnungsgrad durchgeführt wird, und
der ideale Öffnungsgrad die folgende Bedingung 1 erfüllt,
Bedingung 1: Wenn der Öffnungsgrad zum Zeitpunkt der Bestimmung der maximale Öffnungsgrad ist und der erfasste Wert kleiner als ein erster Schwellenwert ist, ist der ideale Öffnungsgrad kleiner als der maximale Öffnungsgrad, und wenn der Öffnungsgrad zum Zeitpunkt der Bestimmung der minimale Öffnungsgrad ist und der erfasste Wert gleich oder größer als der erste Schwellenwert ist oder einen zweiten Schwellenwert überschreitet, der vom ersten Schwellenwert verschieden ist, ist der ideale Öffnungsgrad größer als der minimale Öffnungsgrad.

2. Steuerungsverfahren für die Grillvorrichtung für das Fahrzeug (20) gemäß Anspruch 1,
wobei der ideale Öffnungsgrad ferner die folgende Bedingung 2 erfüllt,
Bedingung 2: Wenn der Öffnungsgrad zum Zeitpunkt der Bestimmung der maximale Öffnungsgrad ist und der erfasste Wert gleich oder größer als der erste Schwellenwert ist, ist der ideale Öffnungsgrad der maximale Öffnungsgrad, wenn der Öffnungsgrad zum Zeitpunkt der Bestimmung der maximale Öffnungsgrad ist und der erfasste Wert kleiner als der erste Schwellenwert ist, ist der ideale Öffnungsgrad der minimale Öffnungsgrad, wenn der Öffnungsgrad zum Zeitpunkt der Bestimmung der minimale Öffnungsgrad ist und der erfasste Wert gleich oder kleiner als der zweite Schwellenwert ist, ist der ideale Öffnungsgrad der minimale Öffnungsgrad, und wenn der Öffnungsgrad zum Zeitpunkt der Bestimmung der minimale Öffnungsgrad ist und der erfasste Wert den zweiten Schwellenwert überschreitet, ist der ideale Öffnungsgrad der maximale Öffnungsgrad, bei dem der zweite Schwellenwert größer als der erste Schwellenwert ist.

3. Steuerungsverfahren für die Grillvorrichtung für das Fahrzeug (20) gemäß Anspruch 1,
wobei der ideale Öffnungsgrad ferner die folgende Bedingung 3 erfüllt,
Bedingung 3: Wenn der Öffnungsgrad zum Zeitpunkt der Bestimmung der maximale Öffnungsgrad ist und der erfasste Wert gleich oder höher als der erste Schwellenwert ist, ist der ideale Öffnungsgrad der maximale Öffnungsgrad, wenn der Öffnungsgrad zum Zeitpunkt der Bestimmung der maximale Öffnungsgrad ist und der erfasste Wert niedriger als der erste Schwellenwert ist, ist der ideale Öffnungsgrad ein Öffnungsgrad, der basierend auf einem Reduktionsprofil (500, 501) bestimmt wird, in dem der Öffnungsgrad kontinuierlich oder allmählich gemäß der Reduktion des erfassten Wertes reduziert wird, wenn der Öffnungsgrad zum Zeitpunkt der Bestimmung der minimale Öffnungsgrad ist und der erfasste Wert gleich oder kleiner als der zweite Schwellenwert ist, ist der ideale Öffnungsgrad der minimale Öffnungsgrad, und wenn der Öffnungsgrad zum Zeitpunkt der Bestimmung der minimale Öffnungsgrad ist und der erfasste Wert den zweiten Schwellenwert übersteigt, ist der ideale Öffnungsgrad ein Öffnungsgrad, der basierend auf einem Erhöhungsprofil (600, 601) bestimmt wird, in dem der Öffnungsgrad kontinuierlich oder allmählich gemäß der Erhöhung des erfassten Wertes erhöht wird, bei dem der erste Schwellenwert niedriger als ein erfasster Wert ist, bei dem der Öffnungsgrad der maximale Öffnungsgrad in dem Erhöhungsprofil (600, 601) ist, und der zweite Schwellenwert höher als ein erfasster Wert ist, bei dem der Öffnungsgrad der minimale Öffnungsgrad in dem Reduzierungsprofil (500, 501) ist.

## Revendications

1. Procédé de commande pour un dispositif de calandre destiné à un véhicule (20), agencé dans une partie d'extrémité antérieure du véhicule et présentant une ouverture (21) de calandre dont un degré d'ouverture est susceptible d'être réglé entre le degré d'ouverture minimum et le degré d'ouverture maximum,
le véhicule comprenant un climatiseur destiné à un véhicule (100), le dispositif de calandre du véhicule (20), le moyen (40) de commande de calandre commandant le dispositif de calandre du véhicule et un radiateur refroidi par de l'air extérieur introduit à partir de l'ouverture de calandre,
le climatiseur pour le véhicule (100) comprenant
un cycle frigorifique (1) doté d'un circuit (50) d'agent frigorigène reliant un compresseur (2), un condenseur (3), un détendeur (4) et un évaporateur (5) par des tuyaux (61, 62, 63, 64, 65, 66) pour faire circuler un agent frigorigène, et un échangeur (10) de chaleur interne réalisant un échange de chaleur de l'agent frigorigène entre une première partie (11) d'échange de chaleur dans laquelle s'écoule l'agent frigorigène introduit du condenseur (3) au détendeur (4) et une seconde partie (12) d'échange de chaleur dans laquelle s'écoule l'agent frigorigène introduit de l'évaporateur (5) à un côté aspiration du compresseur (2),
le condenseur refroidissant l'agent frigorigène dans l'état vaporisé à haute température et à haute pression refoulé à partir du compresseur (2) en utilisant de l'air extérieur devant le véhicule introduit en provenance de l'ouverture (21) de calandre par l'avancement du véhicule et/ou le fonctionnement d'un ventilateur (7) de refroidissement, de sorte que l'agent frigorigène passe à un état liquide à haute température et à haute pression,
le climatiseur pour le véhicule (100) comprenant un premier capteur (31) de température détectant une température de l'évaporateur ou une température de l'air traversant l'évaporateur, ou un second capteur (32) de température doté d'un point de mesure entre l'évaporateur et l'échangeur de chaleur interne et
une partie de sortie délivrant une valeur détectée qui est détectée par le premier capteur (31) de température ou le second capteur (32) de température à un moyen (40) de commande de calandre, le procédé de commande comportant :
l'étape S11 consistant à déterminer le degré d'ouverture à l'instant de la détermination par le moyen (40) de commande de calandre ;
l'étape S12 consistant à comparer la valeur détectée avec une valeur seuil prescrite par le moyen (40) de commande de calandre ; et
l'étape S13 consistant à faire commander l'ouverture de calandre par le moyen (40) de commande de calandre,
**caractérisé en ce que** l'étape S13 comprend l'étape S131 consistant à calculer un degré d'ouverture idéal nécessaire pour refroidir le condenseur (3), l'étape S132 consistant à calculer un degré nécessaire d'ouverture nécessaire pour refroidir le radiateur et l'étape S133 consistant à comparer le degré d'ouverture idéal avec le degré d'ouverture nécessaire,
lorsque le degré d'ouverture idéal dépasse le degré d'ouverture nécessaire, une commande consistant à régler l'ouverture (21) de calandre au degré d'ouverture idéal étant réalisée, et lorsque le degré d'ouverture idéal est inférieur ou égal au degré d'ouverture nécessaire, une commande consistant à régler l'ouverture (21) de calandre au degré d'ouverture nécessaire étant réalisée, et
le degré d'ouverture idéal satisfaisant la condition 1 qui suit,
Condition 1 : lorsque le degré d'ouverture à l'instant de la détermination est le degré d'ouverture maximum et la valeur détectée est inférieure à une première valeur seuil, le degré d'ouverture idéal est inférieur au degré d'ouverture maximum, et lorsque le degré d'ouverture à l'instant de la détermination est le degré d'ouverture minimum et la valeur détectée est supérieure ou égale à la première valeur seuil ou dépasse une seconde valeur seuil différente de la première valeur seuil, le degré d'ouverture idéal est supérieur au degré d'ouverture minimum.

2. Procédé de commande pour le dispositif de calandre du véhicule (20) selon la revendication 1,
le degré d'ouverture idéal satisfaisant en outre la condition 2 qui suit,
Condition 2 : lorsque le degré d'ouverture à l'instant de la détermination est le degré d'ouverture maximum et la valeur détectée est supérieure ou égale à la première valeur seuil, le degré d'ouverture idéal est le degré d'ouverture maximum, lorsque le degré d'ouverture à l'instant de la détermination est le degré d'ouverture maximum et la valeur détectée est inférieure à la première valeur seuil, le degré d'ouverture idéal est le degré d'ouverture minimum, lorsque le degré d'ouverture à l'instant de la détermination est le degré d'ouverture minimum et la valeur détectée est inférieure ou égale à la seconde valeur seuil, le degré d'ouverture idéal est le degré d'ouverture minimum, et lorsque le degré d'ouverture à l'instant de la détermination est le degré d'ouverture minimum et la valeur détectée dépasse la seconde valeur seuil, le degré d'ouverture idéal est le degré d'ouverture maximum dans lequel la seconde valeur seuil est supérieure à la première valeur seuil.

3. Procédé de commande pour le dispositif de calandre du véhicule (20) selon la revendication 1,
le degré d'ouverture idéal satisfaisant en outre la condition 3 qui suit,
Condition 3 : lorsque le degré d'ouverture à l'instant de la détermination est le degré d'ouverture maximum et la valeur détectée est supérieure ou égale à la première valeur seuil, le degré d'ouverture idéal est le degré d'ouverture maximum, lorsque le degré d'ouverture à l'instant de la détermination est le degré d'ouverture maximum et la valeur détectée est inférieure à la première valeur seuil, le degré d'ouverture idéal est un degré d'ouverture déterminé d'après un profil (500, 501) de réduction dans lequel le degré d'ouverture est réduit de manière continue ou progressive en fonction d'une réduction de la valeur détectée, lorsque le degré d'ouverture à l'instant de la détermination est le degré d'ouverture minimum et la valeur détectée est inférieure ou égale à la seconde valeur seuil, le degré d'ouverture idéal est le degré d'ouverture minimum, et lorsque le degré d'ouverture à l'instant de la détermination est le degré d'ouverture minimum et la valeur détectée dépasse la seconde valeur seuil, le degré d'ouverture idéal est un degré d'ouverture déterminé d'après un profil (600, 601) d'accroissement dans lequel le degré d'ouverture est accru de manière continue ou progressive en fonction d'un accroissement de la valeur détectée, la première valeur seuil étant inférieure à une valeur détectée à laquelle le degré d'ouverture est le degré d'ouverture maximum dans le profil (600, 601) d'accroissement et la seconde valeur seuil étant supérieure à une valeur de détection à laquelle le degré d'ouverture est le degré d'ouverture minimum dans le profil (500, 501) de réduction.
